# EUROPEAN PATENT APPLICATION

(11) **EP 4 321 063 A1**
(43) Date of publication of application: **14.02.2024**
(21) Application number: 22718826.5
(22) Date of filing: 29.03.2022
(51) Int. Cl.: A47J 31/36

(54) **SYSTEMS AND METHODS INCLUDING CARTRIDGES OF INDIVIDUAL PORTIONS OF EDIBLE SUBSTANCES**

(30) Priority: 09.04.2021 PT 2021117169
(71) Applicant: Novadelta - Comércio e Indústria de Cafés, Unipessoal Lda, 1950-041 Lisboa (PT)
(72) Inventor: NABEIRO, Rui Miguel, 7370-112 Campo Maior (PT); DE FIGUEIREDO BRANCO, João André, 1885-091 MOSCAVIDE (PT); DA SILVA FERROLHO MENDES, Tiago Rafael, 1300-001 LISBOA (PT); FIGUEIRA BARROS DOS REIS, Claudia, 1495-130 LISBOA (PT)
(74) Representative: Ferreira Pinto, Francisca
(86) International application number: PCT/PT2022/050013
(87) International publication number: WO 2022/216166

(57) **Abstract**

The present invention refers to systems of distribution and preparation of edible products, that include cartridges (1, 1') adapted for collection of single portions (2) of edible substances devoid of single packages, and apparatus (10) for preparation of edible products, such as aromatic beverages, for example espresso type coffee, adapted for operating single portions (2) in product preparation devices (12), for example extraction devices, whereby the systems and processes are adapted so that provide a simpler and more reliable handling of the cartridges (1, 1') and/or single portions (2), as well as present a simpler construction and provider better ergonomics.

The present invention further refers to processes of operation of systems of the type of the present invention.

## Description

### Field of the invention

The present invention refers to the field of systems and processes of distribution and preparation of edible products, such as for example espresso coffee and other coffee-based beverages, in particular including the operation of cartridges for collection of single portions and/or operation of said single portions of edible substance, such as for example roast and ground coffee beans.

### Background of the invention

The distribution of coffee beans to consumption locations where beverage preparation apparatus are operated based upon single portions, for example of roast and ground coffee beans, is known. It is further known the possibility of operating this type of apparatuses based upon cartridges comprising a plurality of single portions.

In particular there are known beverage preparation systems whereby said cartridges can be associated with the apparatus and so that can be operated by discharge dispositions that can regulate the supply of single portions, In general, said cartridges include a plurality of single portions arranged in an adjacent spatial relation relative to each other, for example in a stack. The single portions comprise a quantity of edible substance and a respective individual package, including in a gas-barrier material, for example in the form of a metallic capsule, or in a filter-like material, for example in the form of a paper pod. Typically the single portions are therefore operated by means of interacting with a respective package.

The document EP 1002490 A1 discloses a beverage preparation apparatus that presents a cartridge adapted so that can collect a plurality of single portions and supply these successively to a discharge disposition that provides functional connection between the cartridge and a beverage preparation device.

The documents EP 104366 B1, EP 1247481 B1, EP 1295553 A1, EP 1962654 B1, EP 2139369 B1 and EP 2958467 B1 also disclose beverage preparation systems including cartridges that can collect a plurality of single portions and be operated by discharge dispositions of beverage preparation apparatuses.

The prior art also includes solutions of cartridges configured as dispensers of single portions, so that a user can thereafter supply these by to a beverage preparation apparatus. The documents EP 1744650 B1, EP 1949833 A1 and WO 2014/135677 A1 disclose solutions of this type. In this case, cartridges can be manually removed and loaded with single portions for posterior delivery to user.

### General description of the invention

A first objective of the present invention is to provide systems for distribution and preparation of edible products, in particular aromatic beverages, that comprises single portions of edible substance, such as for example roast and ground coffee beans, and apparatus adapted for preparation of an edible product, such as for example a beverage by means of coffee extraction, such system presenting less operating costs and less use of materials, in particular packaging materials, as well as greater construction simplicity and operative reliability.

This objective is solved according to the present invention by means of a system according to claim 1.

In particular, this objective is solved by means of systems whereby single portions devoid of single packages can be disposed in a discharge position associated with a discharge disposition upstream of a product preparation device, and delivered only by action of the gravity force, at least upstream of the discharge disposition.

The systems can comprise a cartridge including a package that confines a plurality of single portions that consist on a given quantity of aromatic edible substance, optionally further other substances derived from at least one of: a vegetal substance, an edible vegetal substance, an aromatic edible vegetal substance.

In particular, the objective is solved by means of a system that comprises a cartridge with an alignment of single portions devoid of a single envelop or package, and further comprises an apparatus for preparing edible products with a discharge disposition adapted so that can operate the delivery of single portions to a product preparation device, for example an extraction device whereby a pressurized flow is made circulate through the single portion.

The single portions can consist of an aromatic edible substance and an edible coating including compounds derived from at least one of: a vegetal substance, an edible substance, an aromatic edible vegetal substance, the aromatic edible vegetal substance of the single portions.

The single portions are advantageously devoid of an individual package or in a material different from the edible substance, so that the edible substance provides at least part, preferentially at least most part, particularly preferentially the totality of its exterior surface.

The cartridge can be provided only by substances derived from at least one of: a vegetal substance, an edible vegetal substance, an aromatic edible vegetal substance, the aromatic edible substance of the single portions, and be devoid of materials of vegetal origin.

At least part of the package can be provided by substances derived from at least one of: a vegetal substance, an edible vegetal substance, an aromatic edible vegetal substance, the aromatic edible vegetal substance of the single portions.

The package can be devoid of materials of non-vegetal origin and be adapted to provide at least one of: barrier to gases and barrier to liquids.

The single portion can be in the form of a previously compacted granulate of aromatic edible substance individual.

The aromatic edible substance can be an aromatic edible substance for preparing beverages, such as for example coffee, tea, chocolate or similar.

The aromatic edible substance can be granulate of previously roast and ground coffee beans.

The single portion can be in the form of a compacted tablet of roast and ground coffee beans, or of soluble coffee powder, presenting a weight comprised between 4 g and 16 g, preferentially between 4 g and 12 g, particularly preferentially between 5 g and 9 g.

The compacted table can present a single central symmetry axis, and a rotation symmetric shape when seen in top view, relative to the central symmetry axis.

The compacted table can present a cross section of circular shape only seen from the top or from the bottom.

The compacted table can present a general shape of disc type, ring type or similar.

The compacted table can present a portion of side wall, when seen in side-view, that extends along a direction generally parallel to the direction of the central symmetry axis of the single portion, preferentially between at least most part of the extension between top and base surfaces.

The compacted table can present different top and base surfaces, whereby it is advantageous when the top surface is configured so as to be impinged by an upstream flow, and the base surface is configured so that can provide flow downstream of the table.

The compacted table can present an upstream-oriented cavity different from a downstream-oriented cavity, so that the contact surface with pressurized flow is bigger than the surface of intersection with a reference transversal plane.

In particular, the system can include at least one type of cartridge adapted to deliver single portions devoid of at least one of: substances of non-vegetal origin, non-edible vegetal substances, non-aromatic edible vegetal substances, to at least one of: consumption location and product preparation apparatus.

The system can include at least two types of cartridges that differ in at least one of: material of the container part, inclusion of interior package or not, dimension and shape of the container part, dimension and shape of the closing part, colour of at least one of: container part and closing part.

Moreover, the system can include at least two types of apparatuses for preparing edible products that differ in at least one of: inclusion or not of cartridge, inclusion or not of cartridge retention disposition configured so that can collect at least part of the cartridge, including the closing part, or at least most part of the cartridge, number of cartridge retention dispositions.

Another objective is to provide a process of operation more efficient and more ergonomic of single portions and apparatuses for preparing edible products in systems of distribution and preparation of edible products of the type of the present invention.

The objective above is solved according to the present invention by means of a process according to claim 16.

In particular, the process can include successively supplying single portions one-by-one to a product preparation device, from a cartridge or from a collection part, so that the central symmetry axis of the single portions results in an alignment similar to the direction of injection of pressurized flow in the product preparation device, and directly impinging the single portions with a pressurized flow directed along a prevailing direction that is similar to the one of the respective central symmetry axis, whereby impinging of single portions unfolds directly upon the surface of an edible substance, and not of other substance upstream thereof.

The process can include providing a system according to any of claims 1 to 15.

In particular, the process can include the retention in operative position of one of: a cartridge, a collection part and a support part of discharge disposition, operative position where the supply of single portions can be operated in articulation with the product preparation device.

The process can include the removal of an alignment of single portions from a cartridge and placement thereof in at least one of: a collection part and a support part of the discharge disposition.

In the context of the present application, the expression "package" means an item configured so as to jointly confine a plurality of single portions, including in a confinement adapted for at least one of: transport of single portions between a distribution location and consumption location, and discharge operation associated with an apparatus for preparing products, or associated with an apparatus for preparing a product, or being one of the components of said apparatus.

Examples of consumption locations include public consumption locations, such as for example cafés and restaurants, that include one or several apparatus for preparation of beverages, and private consumption locations that include, for example, only one beverage preparation apparatus.

In said consumption locations there is at least one beverage preparation apparatus based upon roast and ground coffee beans or substance derived therefrom, such as for example espresso coffee and e similar.

The apparatus for preparing a product can include flow supply means and a product preparation device, for example aromatic beverages, in particular an extraction device adapted so that can carry out cycles of extraction of single portions of roast and ground coffee beans.

The apparatus can be adapted so that can supply a processing fluid at a pressure of at least 2 bar, preferentially at least 8 bar, and at a temperature of at least 60°C, preferentially at least 80°C, to an extraction device that can collect single portions.

The apparatus can further comprise supply means of pressurized and heated fluid, in flow connection with said beverage preparation device.

Examples of this type of beverage preparation apparatuses, for example including automatic machines for preparing espresso type coffee and similar beverages, are abundantly known in prior art such that one abdicates from a more detailed description thereof.

### Description of the Figures

The invention shall be hereinafter explained in greater detail based upon preferred embodiments and on the attached Figures.

The Figures show embodiments of the present invention in simplified schematic representations:
- Figure 1:: views of a single portion (2);
- Figure 2:: views of an alignment of single portions (2);
- Figure 3:: side cut and top views of a first preferred embodiment of cartridge (1);
- Figure 4:: side cut views of a second embodiment of cartridge (1'), including first and second package (3A, 3B);
- Figure 5:: first instant of a first embodiment of placement of a cartridge (1) in operative position on an apparatus (10);
- Figure 6:: second instant of a first embodiment of placement of a cartridge (1) in operative position on an apparatus (10);
- Figure 7:: first instant of a second embodiment of placement of a cartridge (1) in operative position on an apparatus (10);
- Figure 8:: second instant of a second embodiment of placement of a cartridge (1) in operative position on an apparatus (10);
- Figure 9:: second instant of a third embodiment of placement of a cartridge (1) in operative position on an apparatus (10);
- Figure 10:: second instant of a fourth embodiment of placement of a cartridge (1) in operative position on an apparatus (10);
- Figure 11:: flux diagram of a first embodiment of a process according to the invention;
- Figure 12:: flux diagram of a first embodiment of a process according to the invention;
- Figure 13:: views of respective top regions of first embodiment of closing part (32) of cartridge (1) and discharge disposition (11) of apparatus (10);
- Figure 14:: views of respective top regions of second embodiment of closing part (32) of cartridge (1) and discharge disposition (11) of apparatus (10);
- Figure 15:: front and side cut views of an embodiment of system;
- Figure 16:: front and side cut views of an embodiment of system;
- Figure 17:: top view of a first embodiment of a cluster of discharge dispositions (11) on an apparatus (10) ;
- Figure 18:: top view of a second embodiment of a cluster of discharge dispositions (11) on an apparatus (10) ;
- Figure 19:: top view of a third embodiment of a cluster of discharge dispositions (11) on an apparatus (10) ;
- Figure 20:: top view of a fourth embodiment of a cluster of discharge dispositions (11) on an apparatus (10) ;
- Figure 21:: side view of a first embodiment of a second type of apparatus (10');
- Figure 22:: front view of a second embodiment of a second type of apparatus (10');
- Figure 23:: flux diagram of embodiment of process according to the invention;
- Figure 24:: flux diagram of embodiment of process according to the invention.

### Description of preferred embodiments of the invention

The present invention shall be described based upon the case of systems for distribution and preparation of beverages, for example of espresso coffee type, for example of espresso coffee type, soluble coffee, tea or similar, without excluding other beverages.

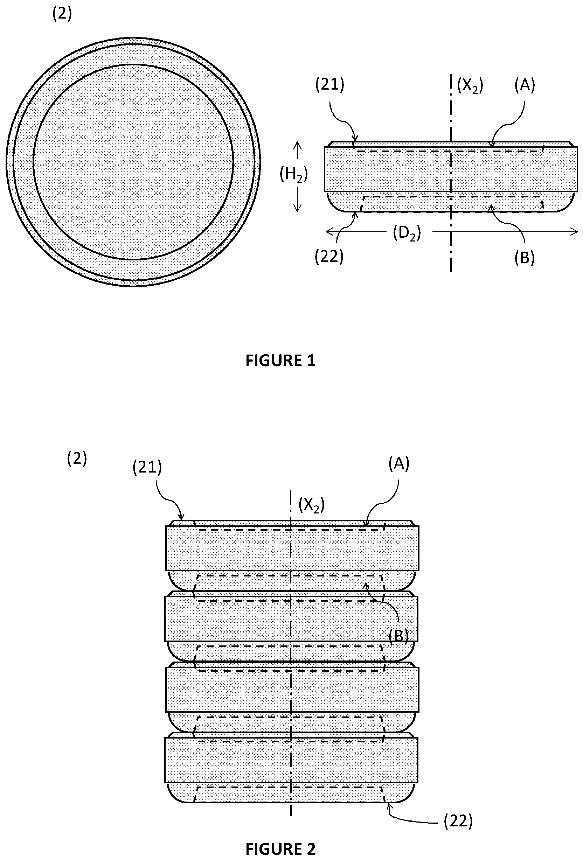

The cartridges (1) according to the present invention are adapted so that can collect and supply single portions (2) of an aromatic edible substance (see **Figures 1** and **2**) devoid of a respective single package, whereby the gas barrier function can be provided by the package (3) that collects a previously defined set of a plurality of single portions (2).

The single portions (2) consist in a portion of edible substance, in particular in a compacted tablet of a granulate or powder of an aromatic edible substance, such as for example roast and ground coffee, so that maintains a volumetric shape.

Alternatively, the single portions (2) consist of a portion of aromatic edible substance and of an edible coating that includes compounds associated with an edible substance, preferentially also aromatic, and that can be adapted to provide at least partial barrier to liquids and/or to gases. It is preferred when the edible coating presents chemical affinities with the aromatic edible substance of the single portion, for example is obtained from coffee or from a coffee derivate.

The single portions (2) do not include, therefore, a respective single package in a material with gas barrier property different or non-derived from a vegetal substance, including of metallic, synthetic, or non-biodegradable materials, such as for example aluminium capsule, container of synthetic material, and similar.

The single portions (2) can present a shape with a height (H₂) and most part of the exterior surface on an upstream-oriented surface and on a downstream-oriented face, both mostly extending along a direction transversal to the direction of a single central symmetry axis (X₂), thereby providing a similar extension of crossing of pressurized flow along at least most part of its characteristic dimension (D₂), and separated by a smaller part of exterior surface on a lateral face, for example of disc, ring or similar type.

It has been demonstrated as particularly advantageous when the single portions (2) are configured so that the edible substance of adjacent single portions (2) can only be in direct contact by parts of respective surfaces, such as for example a part of ring shape of the top surface, or upstream-oriented, or base surface, or downstream-oriented.

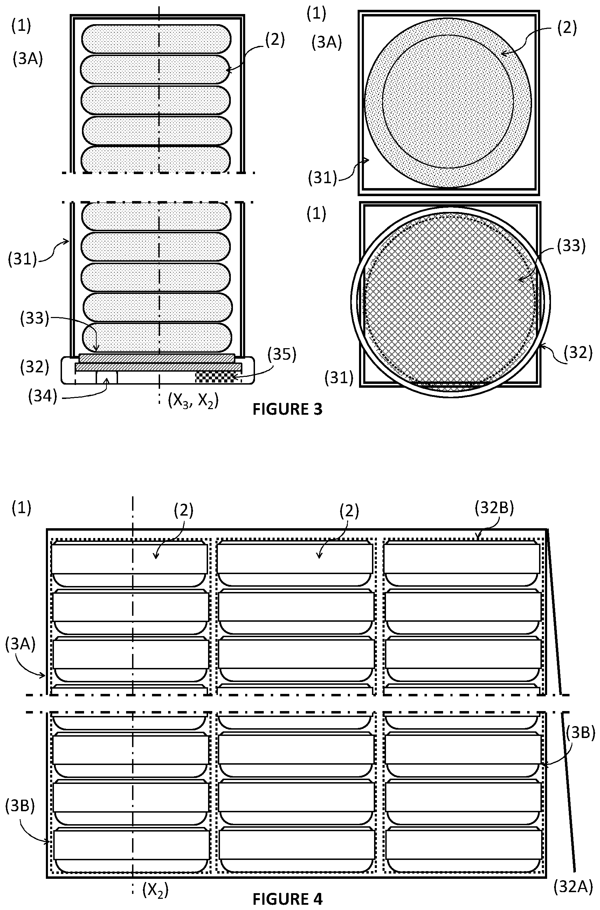

**Figures 3** and **4** represent preferred embodiments of cartridges (1, 1') that are part of a system according to the present invention.

The cartridge (1) can include a package (3) with a generally elongated and tubular shape along at least most part of its longitudinal extension, configured so as to contain at least a disposition of single portions (2) with central symmetry axis (X₂) aligned along a same direction, for example at least one stack of single portions (2).

According to one aspect, the package (3; 3A, 3B) presents a cross section with a shape different from the cross section of the single portions (2). In particular, at least a part of package (3), preferentially at least an exterior package (3A) presents a non-circular cross section.

According to another aspect, at least one part of the package (3; 3A, 3B), preferentially at least one of: an interior package (3B) and an exterior package (3A) can be provided in a material that includes compounds associated with or derived from a vegetal substance, further preferentially from an edible vegetal substance.

The package (3) can present a container part (31) configured so that can collect a plurality of single portions (2), and at least a closing part (32) associated with a top edge of the container part (31) so that can provide gas sealed closing thereof, and preferentially with a cross section similar to, in particular bigger by only a clearance than a cross section of single portion (2).

Moreover, at least part of the package (3; 3A, 3B) can include a container part (31) that presents a characteristic dimension (D₃) comprised between 1,02 and 1,15 times, preferentially between 1,03 and 1,10 times the characteristic dimension (D₂) of the single portions (2).

According to another aspect of the present invention, a cartridge (1) comprises a package (3) adapted so that the cartridge (1) can be operated retained in functional connection and sealed to the ambient atmosphere, whereby the closing part (32) of package (3) can be adapted so that provides the functional connection and the gas sealing connection of the cartridge (1) in operative position.

The cartridge (1) can present a closing part (32) configured so that can provide retention, recognition and sealing of a cartridge (1) in operative position, that is, when functionally connected with the discharge disposition (11) of an apparatus (10) for preparing edible products.

The closing part (32) can present a cross section with at least one of: a different characteristic dimension and a different shape from the cross section of the container part (31) .

The closing part (32) can present a cross section with a circular, oval, quadratic, prismatic shape.

At least the container part (31), preferentially also the closing part (32), can be provided in a recyclable material, preferentially in a compostable material presenting gas barrier properties.

The system can include at least one of:
- a first type of cartridge (1) adapted so that can be operatively retained in a discharge disposition (11) of apparatus (10), and
- a second type of cartridge (1') adapted so that can supply a first type of cartridge (1) that can be part of a second type of apparatus (10'), optionally adapted so that can operatively retained in a discharge disposition (11) of apparatus (10').

The system can include at least one type of cartridge (1, 1') adapted so that can be retained in the product preparation apparatus (10), optionally so that is part thereof, or can be at least partially associated with or form fitter in a discharge disposition (11) of the apparatus (10), so that feed a product preparation device (12).

The system can include at least one type of apparatus (10, 10') presenting a discharge disposition (11) configured so that can collect one alignment of single portions (2) in gas sealed manner, and so that can supply the latter to a product preparation device (12) through a conduction disposition (13) that is preferentially devoid of actuation mechanisms.

The cartridge (1) represented in **Figure 3** includes only one exterior package (3A) that includes a container part (31) preferentially provided in a gas barrier material and that confines a stack of single portions (2), preferentially at least 15, or at least 20, and at most 50, or at most 40, together with a closing part (32).

It is preferred when the container part (31) and the closing part (32) confine a discharge passageway centred with the central symmetry axis (X₃) of the container part (31), and configured so that provides passageways of single portions (2) only when oriented in the position of the respective central symmetry axis (X₂) in which they are collected inside the container part (31).

As can be observed, the container part (31) presents a shape of cross section, squared in the case of **Figure 3****,** that is different from the shape of cross section of the single portions (2), circular in both cases.

The package (3) is preferentially configured so that can collect at least one alignment of single portions (2) in a previously defined of spatial relationship to each other, and so that can collect at least 15, preferentially at least 20, particularly preferentially at least 30 single portions (2).

The closing part (32) can present a shape of cross section of the discharge passageway similar to that of the single portions (2) and a wall thickness bigger than that of the container part (31).

It is preferred when in the case of two packages (3) disposed side-by-side, only in respective closing parts (32) can be in direct contact.

In the case of the represented embodiment, the closing part (32) is configured so that can retain closing means (33) of the discharge passageway, in the form of a lid that extends along at least part of the longitudinal extension of the closing part (32) and that can be retained by pressured-fitting in a perimeter region of the closing part (32).

Moreover, the closing part (32) can present at least one of: closing means (33), retention means (34) and data means (35) .

The closing part (32) can further present retention means (34), preferentially disposed in an interior lateral face **(****Figure 3**) or exterior thereof, adapted so that can provide removable engagement in the discharge disposition (11) of a product preparation apparatus (10).

The closing part (32) can further present data means (35), for example in the form of symbols or a code, advantageously disposed on an exterior lateral face **(****Figure 3**) of the closing part (32), in particular so that can only be apprehended when in an angular position associated with the operative position of the cartridge (1) in a discharge disposition (11). The data means (35) are advantageously adapted so that can be automatically apprehended by data apprehension means (14) operable in functional connection with control means (15) of the apparatus (10).

The cartridge (1') represented in **Figure 4** comprises an exterior package (3A) and an interior package (3B).

The exterior package (3) can be provided in a material that does not ensure gas barrier but barrier to ultraviolet radiation, for example in cardboard, and the interior package (3B) can be provided in a material that ensures gas barrier, and preferentially biodegradable.

In particular, it is preferred when the interior package (3B) is provided in a material that comprises compounds of vegetal substances, or obtained from at least one of: vegetal substance, edible vegetal substance, and aromatic edible vegetal substance, in particular corresponding to the single portion (2) .

According to a particular aspect, the package (3) and the single portions (2) consist in materials that comprise compounds of vegetal substances, or obtained from at least one of: vegetal substance, edible vegetal substance, and aromatic edible vegetal substance, in particular corresponding to the single portion (2) .

The interior package (3B) can be provided in a flexible material, non-self-supporting, and presenting a container part (31) and a closing part (32) of easy manual opening, for example disposed in a top region and for example of the type closure by welding and weakened rupture zone for preferential opening.

The cartridge (1) can present a prismatic shape adapted so that can collect a single interior package (3B), or a parallelepiped shape adapted so that can collect a plurality of interior packages (3B), such as in the case of **Figure 4****.**

The shape and dimension of the closing parts (32A, 32B), as well as the exit direction of the single portions (2) and position thereof relative to the central symmetry axis (X₂) of the single portions (2), can be different in the case of the closing parts (32A, 32B) of the exterior and interior packages (3A, 3B).

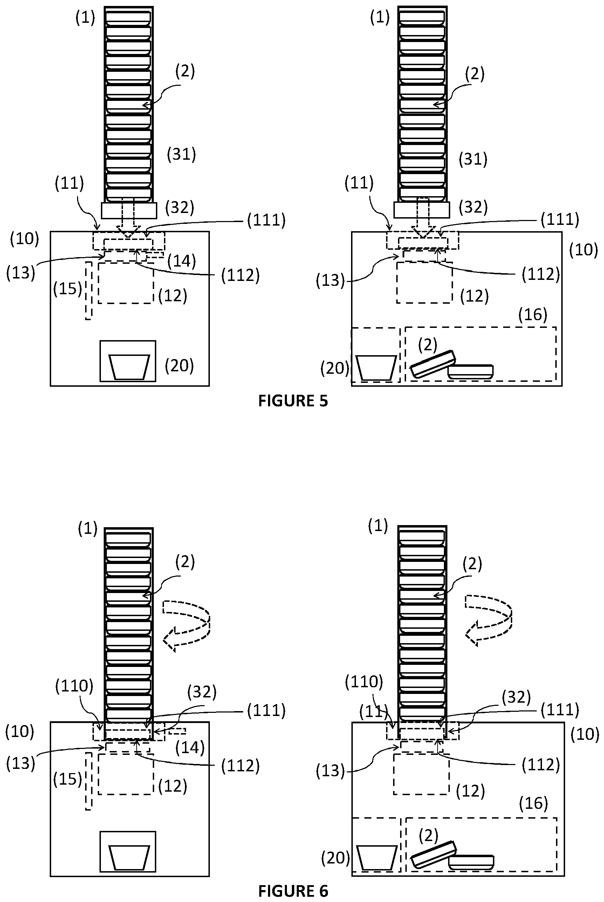

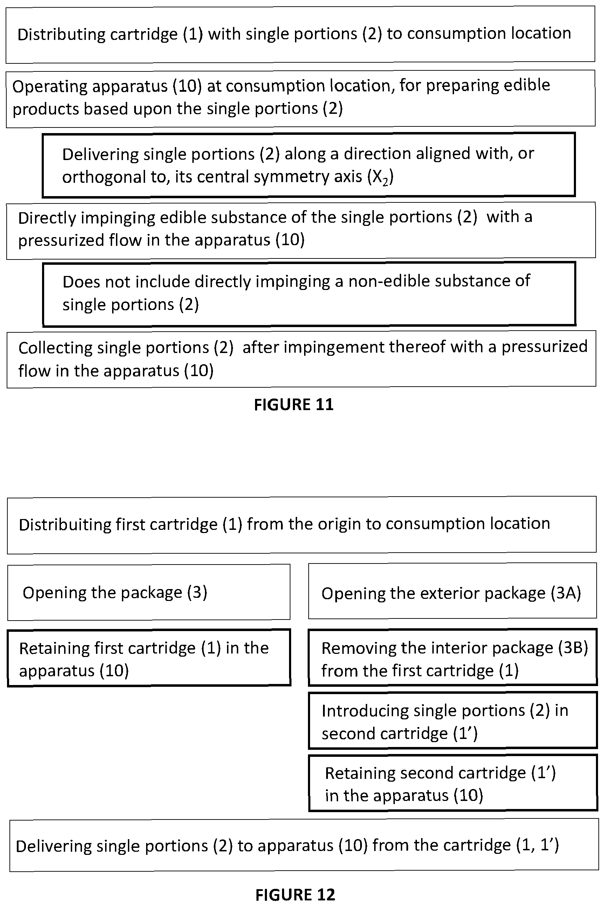

**Figures 5** to **10** represent preferred embodiments of systems of distribution and preparation of edible products according to the present invention that can also be interpreted based upon the embodiments of operation processes represented in **Figures 11** and **12****.**

In general, the cartridge (1) can be configured as at least one of: a package adapted for transport of single portions (2) to a consumption location, and a container adapted to operate associated with, or as part of an apparatus (10). That is, the package (3) can be package in the sense that can serve only for transport between locations or uses, and/or can be a container in the sense that can be used to operate apparatuses.

The package (3) can be adapted so that the cartridge (1) can be operated according to at least one of:
- retained in removable manner by a region of the package (3), preferentially by the closing part (32), with a transversal dimension at least approximately similar to and neighbouring to the transversal dimension of the discharge passageway for single portions (2), and in gas sealed manner relative to ambient atmosphere;
- retained in a collection part (110) of the discharge disposition (11) configured as a recess or cavity relative to the exterior surface or casing of apparatus (10) ;
- retained on a support part (111) of discharge disposition (11) configured as a space at least partially confined, preferentially at least mostly confined inside the product preparation apparatus (10).

In the case of a first embodiment, represented in **Figures 5** and **6** and corresponding to a process represented in **Figure 11****,** a cartridge (1) is delivered to a consumption location and can be operatively retained in a discharge disposition (11) of an apparatus (10), so that the single portions (2) can be supplied to a product preparation device (12) along a single vertical direction aligned with its central symmetry axis (X₂).

The retention of the cartridge (1) is advantageously carried out by retention means (34) associated with the closing part (32) and that can include shape retention by means of pressurized fitting, and retention by engagement, for example of the bayonet type, screw or similar.

The regulation of discharge of the single portions (2) can be carried out by discharge means associated with a conduction disposition (13) and regulated by control means (15) configured so that can regulate the operation of the apparatus (10).

The apparatus (10) can include data apprehension means (14) adapted so that can apprehend data means (35) associated with the closing part (32) of the cartridge (1) when the latter is in a correct operative position. In this case, the data means (35) can be provided in a lateral wall of the closing portion (32) and the data apprehension means in an angular position of an interior lateral wall of the discharge disposition (11) corresponding to said operative retention position.

A residues collection disposition (16) only collects edible substances, in particular aromatic edible substances and water or other edible fluid.

The system can comprises one type of cartridge (1) presenting a package (3) adapted so that can be retained in operative position on the discharge disposition (11) whereby data apprehension means (14) associated with the discharge disposition (11) can apprehend data means (35) associated with the package (3), preferentially associated with an exterior surface of the closing part (32) thereof, including lateral and/or base surface of the closing part (32), and communicating respective data to control means (15) of the apparatus (10).

Moreover, the system can comprise:
- one type of cartridge (1') that can include an exterior package(3A) and at least one interior package (3B), and adapted so that can collect at least one alignment of single portions (2) in the exterior package (3A), each alignment collected in the interior package (3B) and preferentially presenting a number and relative orientation of single portions (2) corresponding to those that can be collected by a discharge disposition (11'), and
- a type of apparatus (10') with a discharge disposition (11') presenting at least one collection part (110) that can confine one alignment of single portions (2) relative to a discharge passageway (112), and preferentially also a support part (111), adapted so that can collect an alignment of single portions (2) in operative position upstream of a discharge passageway (112).

The system can be adapted so that at least one alignment of single portions (2) can be operatively retained in the apparatus (10, 10') so that the single central symmetry axis (X₂) of the single portions (2) results in a previously determined position, for example at least approximately aligned, parallel or orthogonal, relative to a central symmetry axis of the discharge passageway of the discharge disposition (11)

At least one type of cartridge (1, 1') can present a package (3) that can be operatively retained in the apparatus (10) so that the single central symmetry axis (X₂) of the single portions (2) is generally orthogonal relative to a central symmetry axis of the discharge passageway of the discharge disposition (11).

Moreover, the system can comprise at least one of:
- a first type of cartridge (1) adapted so that can distribute single portions (2) to a consumption location, preferentially with a reusable package (3);
- a second type of cartridge (1') adapted so that can only operate at a consumption location, preferentially be part of the apparatus (10), and that can be reloaded with single portions (2) delivered from a first type of cartridge (1).

The system can further comprise at least one of:
- a first type of cartridge (1) reusable and presenting retention means (34) adapted so that can operate in different apparatuses (10) and consumption locations, and
- a second type of cartridge (1') reusable and presenting data means (35) adapted so that can operate in at least one of: an apparatus (10') and a consumption location.
The system can comprise a type of apparatus (10') that presents a plurality of discharge dispositions (11, 11') disposed close to each other, preferentially in a matrix like disposition, each adapted so that can collect at least 20, or retain a cartridge (1') with at least 20, preferentially at least 30 single portions (2), and at most 100, preferentially at most 80 single portions (2).

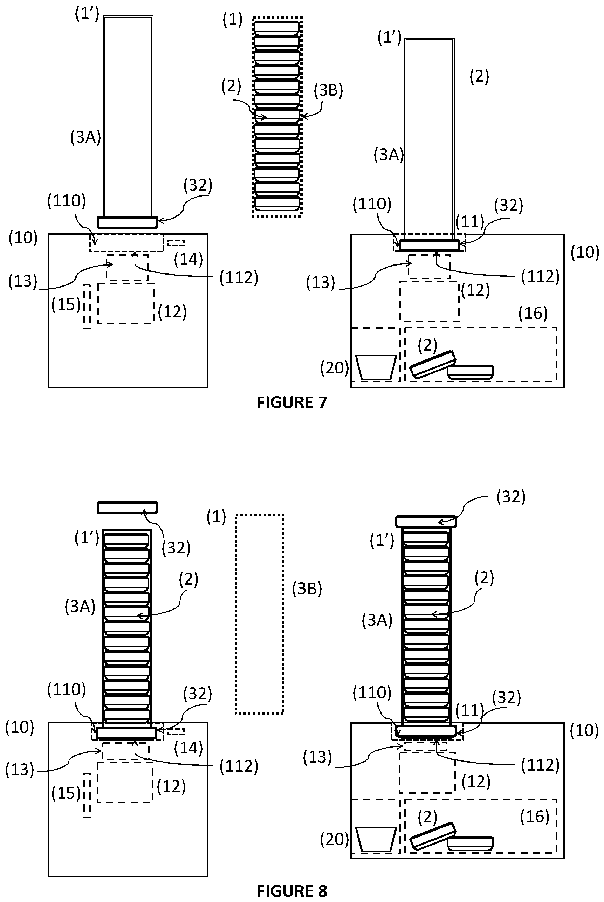

In the case of the embodiments of **Figures** 7 and **8****,** the system includes a first type of cartridge (1) adapted so that can be transported to a consumption location, whereby its exterior package (3A) can be opened so as to remove an interior package (3B) that confined a plurality of single portions (2) with gas barrier. The process of operation can basically follow the way represented on the right-hand side of the flow diagram of **Figure 12****.**

The interior package (3B) can be opened and the single portions (2) can be supplied to a second type of cartridge (1') adapted so that can be operatively retained on the discharge disposition (11) of an apparatus (10).

The second type of cartridge (1') can be provided as being a part of apparatus (10), in particular a part adapted so that can be retained in removable manner in operative position in a discharge disposition (11).

The second type of cartridge (1') can be adapted so that can be removed from the discharge disposition (11) for simplicity of loading of the single portions (2), as represented in **Figure 7****,** or so that can be removed only a portion of package (3), for example a closing part (32) disposed in the top region thereof, as represented in **Figure 8****.**

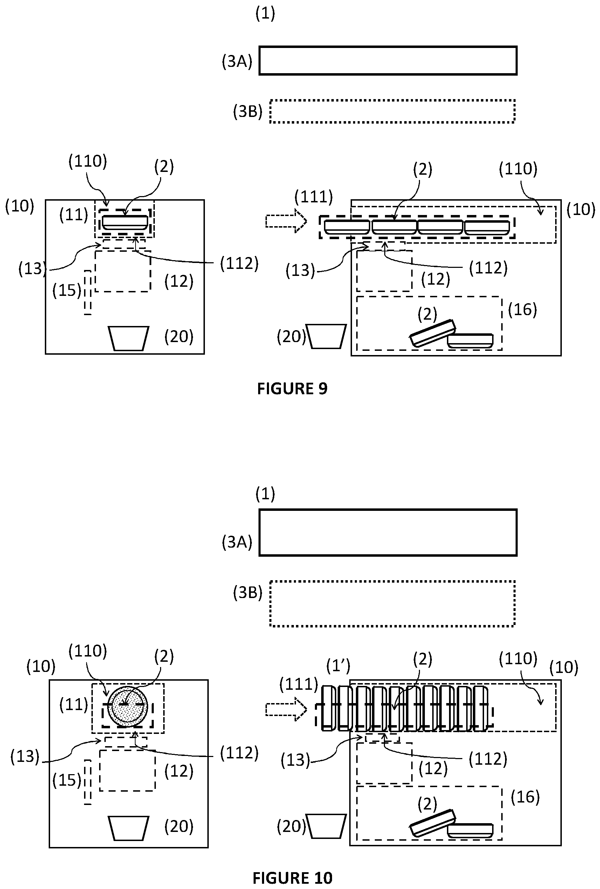

Alternatively, the system can include only one type of package (1) with an exterior package (3) and an interior package (3B), and the apparatus (10) can present a discharge disposition (11) configured as a collection cavity (110) adapted so that can collect a plurality of single portions (2), eventually further presenting a retention support (111), preferentially provided movable between open and closed positions, adapted so that can provide placement of single portions (2), as represented in **Figures 9** and **10** that represent a drawer-like arrangement of the discharge disposition (11).

Alternatively, a cartridge (1) can supply single portions (2) along a direction orthogonal to the symmetry central axis (X₂), as in the case of **Figure 10****.**

The single portions (2) are supplied, preferentially only by action of the gravity force, to a product preparation device (12) where they are impinged by a pressurized fluid flow. For example, water at a temperature between 80 and 98 °C, and a pressure above 2 bar, preferentially above 8 bar.

In particular, the pressurized flow does not directly impinge other substance inside the product preparation device (12) than the edible substance associated with the single portion (2). That is, first impinges upon a portion of the edible substance of the edible substance, and not upon other substances.

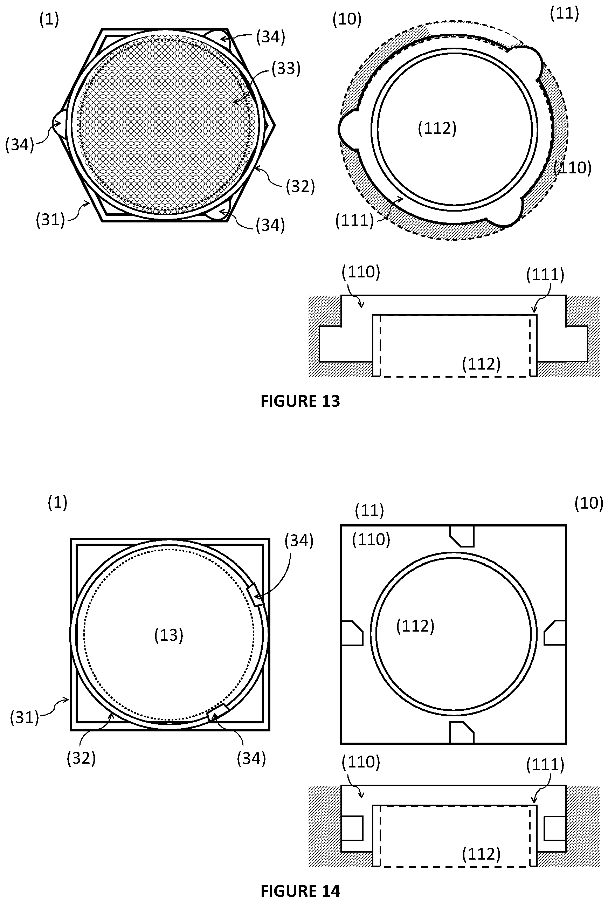

**Figures 13** and **14** represent preferred embodiments of a discharge disposition (11) adapted so that can operatively retain a cartridge (1), including mutually opposing views (top) and side cut views of the discharge disposition (11) (bottom), where the collection part (110) is provided as a cavity in the casing of the apparatus (10) that surrounds a support part (111) .

In the case of a first embodiment, the cartridge (1) can present retention means (34) provided as projections, preferentially at most two or three, that extend laterally and distributed in symmetric manner along a side wall of the closing part (32), and configured so that can provide retention of corresponding openings and cavity in the collection part (110) of the collection disposition (11).

In the case of a second embodiment, the cartridge (1) can present retention means (34) provided as cavities, preferentially at most one or two, distributed in asymmetric manner in the exterior perimeter of the closing part (32) of package (3), and configured so that can be engaged by corresponding retention means associated with the collection part (110).

It is advantageous when the retention means (34) of the cartridge (1) are adapted so that can engage with corresponding retention elements in the container part (110). These retention elements can be configured with an asymmetric shape, adapted so as to provide an engagement limit.

Alternatively (not represented), the retention means (34) can be provided on an interior wall of the closing part (32) and so that can engage with retention elements on the support part (110) .

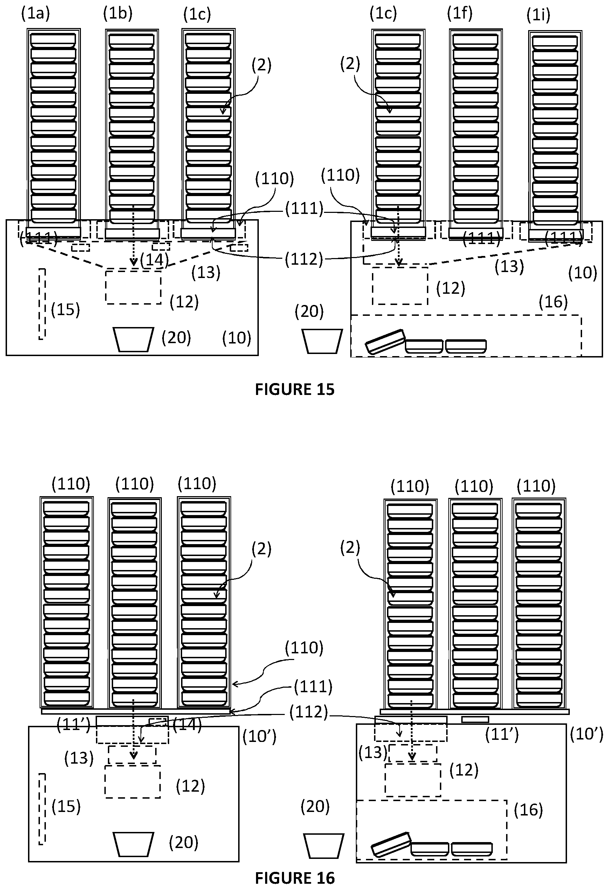

**Figures 15** and **16** represent preferred embodiments of a system whereby cartridges (1) can be retained in the discharge disposition (11) of an apparatus (10).

According to one aspect, the apparatus (10) is configured so that at least part of the discharge disposition (11), including at least a discharge passageway (112), is vertically aligned with a respective product preparation device (12) and the supply of single portions (2) is driven by the gravity force, preferentially only by action thereof, at least upstream of the discharge passageway (112).

Moreover, a first type of apparatus (10) can present discharge dispositions (11) adapted so that can retain cartridges (1), as represented in **Figure 15****,** whereas in the case of a second type of apparatus (10') these discharge dispositions (11') are configured so that can collect alignments of single portions (2) in respective collection parts (110) associated with a support part (111), as represented in **Figure 16****.**

In particular, the apparatus (10) includes a conduction disposition (13) arranged between the discharge passageway (112) of the discharge disposition (11) and the product preparation device (12). It is particularly advantageous when, in the pathway between the discharge passageway (112) and the product preparation device (12), the edible substance of the single portions (2) can only touch in the interior surface of said conduction disposition (13).

According to another aspect, represented in **Figure 15****,** the apparatus (10) can present at least one cluster with a plurality of discharge dispositions (11) disposed relatively close to each other, and in this case arranged on a top surface thereof, that are operatively connected to a respective product preparation device (12). An apparatus (10) can present a plurality of clusters, each thereof functionally associated with a respective product preparation device (12).

The discharge disposition (11) can present data apprehension means (14) adapted so that can apprehend data associated with cartridge (1), in particular by data means (35), or associated with collection parts (110) operatively retained in support parts (111).

**Figure 16** represents a second type of apparatus (10') with a discharge disposition (11) that presents several collection parts (110) configured as generally tubular containers, and adapted so that can collect one alignment of single portions (2) devoid of single packages and so that the latter are impinged by the gravity force towards a discharge passageway (112).

The several collection parts (110) are arranged on a support part (111) adapted so that can be moved in rotation, in a general configuration of carrousel type, so that each collection part (110) can be aligned with the discharge passageway (112).

According to one aspect, the discharge passageway (112) is vertically aligned with the product preparation device (12), in particular with the collection space thereof in an open position, so that the single portion (2) can be supplied through a conduction disposition (13) driven only by the gravity force and preferentially without touching on any interior surface of the apparatus (10') upstream from the product preparation device (12) .

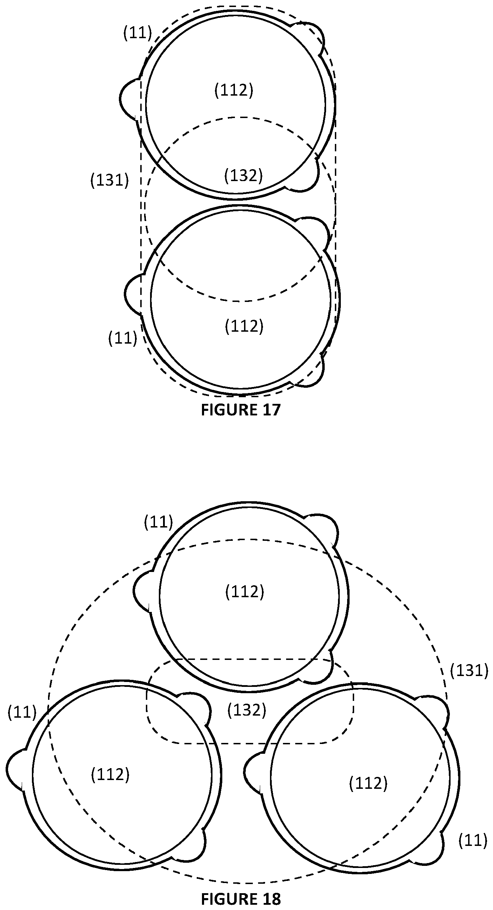

**Figures 17** to **20** represent schematic top views of preferred embodiment of an apparatus (10) that presents a plurality of discharge dispositions (11) associated with a conduction disposition (13), so that a product preparation device (12) can be supplied through a single discharge passageway confined by said conduction disposition (13).

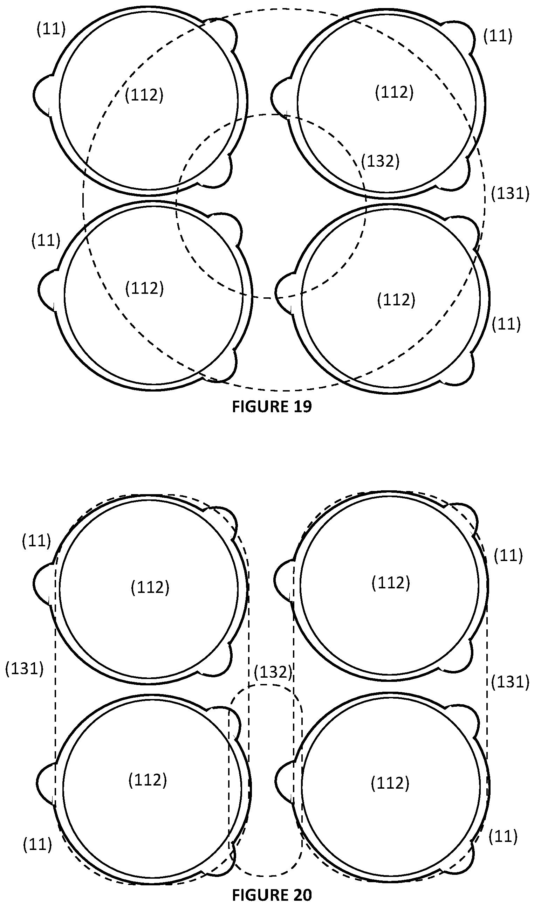

An apparatus (10) can present different arrangements of a plurality of discharge dispositions (11), preferentially of matrix type when seen in top view, including of linear type (**Figure 17**), of triangular type (**Figure 18**), of square type (**Figures 19** and **20**).

According to one aspect, the conduction disposition (13) includes in these cases an upstream portion (131) disposed directly upstream of the discharge disposition (11) and that is configured and extends so that can collect single portions (2) that pass through any one of the discharge passageways, and is, therefore, common to the several discharge passageways (112), and a downstream portion (132) that extends directly between an upstream portion (131) and a downstream region of the product preparation device (12), in particular of an open position thereof.

It is advantageous when the downstream portion (132) confines a discharge passageway with a shape and dimension adapted so that enable passage of a single portion (2) in a relative position, that is, with a relative orientation of the respective central symmetry axis (X₂), generally aligned with the position whereby can be collected with by the product preparation device (12).

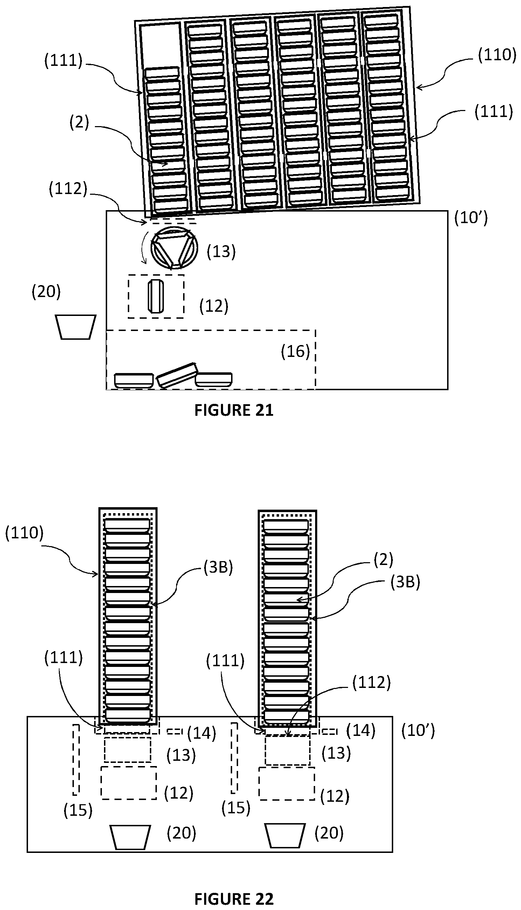

**Figure 21** represents an apparatus (10') that presents a discharge disposition (11) with a collection part (110) confining a plurality of support parts (111) adapted so that each can collect one alignment of single portions (2) devoid of single packages and whereby the one furthest downstream is retained upstream of a discharge passageway (112) and in a direction opposite to the one of the impinging force, in this case only the gravity force. Moreover, the discharge disposition (11) is adapted so that the removal of said retention can be actuated so as to supply the single portions (2) one-by-one to a product preparation device (12), preferentially only the gravity force.

The conduction disposition (13) is in this case configured as a mobile element, for example of rotation drum type, presenting several portions configured for collection of single portions (2) along the perimeter oriented to the discharge passageway (112), and that can be actuated by the single portion (2) that falls by action of the gravity force on a first position and that is rotated so that can be supplied to a product preparation device (12) with a different spatial orientation of respective central symmetry axis (X₂). The conduction disposition (13) can also be driven by elastic, mechanic, electro mechanic or other.

**Figure 22** represents an apparatus (10) that presents two discharge dispositions (11) each one thereof operatively associated with a respective product preparation device (12). The discharge dispositions (11) present collection parts (110) configured as containers that can be retained in removable manner in support parts (111).

The interior packages (3B) are in this case also retained in discharge position inside the container parts (110), and coerced towards the discharge passageway (112) of the discharge disposition (11, 11') by an upstream force, in this case gravity force and, optionally, further elastic, mechanic or electro mechanic force that impinges the interior packages (3B) towards the discharge passageway (112).

Moreover, the discharge dispositions (11) are in this case also adapted so that can actuate the retention of a single portion (2) furthest downstream in each respective alignment of single portions in cartridges (1), and upstream of a discharge passageway (112), so that can be supplied to the product preparation device (12) actuated only by the gravity force.

Thus, as described above, a process according to the invention can include the distribution of a second type of cartridge (1') to a consumption location (C) and the removal of an interior package (3B) that includes an alignment of single portions (2), for example along a respective central symmetry axis (X₂), with the edible substance of one directly adjacent to the edible substance of the other, and so that at least the exterior package (3A) can be reused.

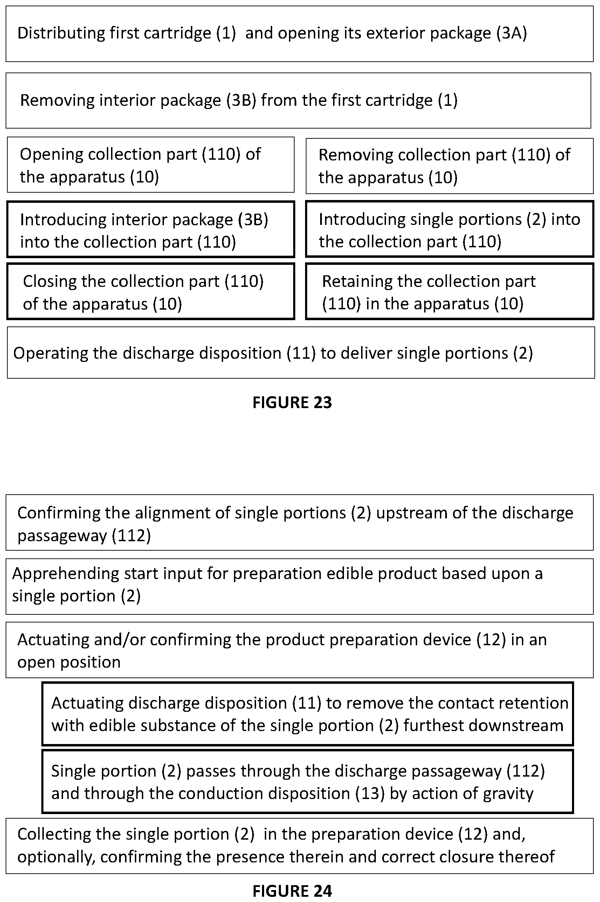

Said interior package (3B) can be placed inside of a collection part (110), or the single portions (2) devoid of interior package (3B), as represented in **Figure 23****.**

As represented in **Figure 24****,** the process can further include the confirmation, preferentially by automatic means, of at least one single portion (2) upstream of the discharge passageway (112). After an input for start of cycle of preparation of edible product, there can be further actuated and/or confirmed whether the product preparation device (12) is in the open position. In this case, removal of the direct contact retention with the edible substance of the furthest downstream single portion (2), that is, directly upstream of the discharge passageway (12), can then be actuated so that the latter can fall, passing by the latter and by the conduction disposition (13) so that can be collected in the product preparation device (12). The latter can then be closed and the fluid circulation through it can be initiated so as to obtain the edible product.

The process can include the following steps:
- retaining a first type of cartridge (1) in the discharge disposition (11), preferentially by means of placing the package (3) in only or at most two previously defined angular positions (11) and rotation thereof by up to 35°, preferentially up to 25°, in a previously defined direction around its central symmetry axis (X₃), in particular so that the passageway opening of the package (3) of the cartridge (1) results aligned upstream with the discharge passageway (112) of a discharge disposition (11) ;
- optionally, detecting the presence and/or a correct position of retention of cartridge (1) in the discharge disposition (11);
- automatically apprehending at least one of: a first set of data associated with an operative position of the cartridge (1) and a second set of data associated with the cartridge (1), whereby the apprehended data is transmitted to control means (15) associated with the apparatus (10);
- apprehending an external input relating to the cartridge (1) and/or to the discharge disposition (11) to be operated in a beverage preparation cycle;
- operating the removal of retention by actuation of the cartridge (1) and/or of the discharge disposition (11), and operating the opening of the product preparation device (12), preferentially by control means (15) of the apparatus (10).

The process can further include the following steps:
- delivering a second type of cartridge (1') to a consumption location;
- removing a plurality of single portions (2) from the second type of cartridge (1') and disposing these inside a collection part (110) of the discharge disposition (11), so that result in operation position of retention relative to the discharge passageway (112) of the discharge disposition (11),
- optionally, detecting the presence and/or correct placement of the alignment of single portions (2) in the collection part (110) and/or in the support part (111) of the discharge disposition (11);
- automatically apprehending at least one of: a first set of data associated with an operative position of the collection part (110), for example presence of a single portion (2) furthest downstream, and a second set of data associated with an operative condition of the collection part (110), for example quantity of single portions (2), whereby the apprehended data are transmitted to control means (15) associated with the apparatus (10);
- apprehending an external input relating to the discharge disposition (11) to be operated in a product preparation cycle;
- operating the removal of retention of single portions (2) by actuation of the discharge disposition (11), and operating the opening of product preparation device (12), preferentially by control means (15) of the apparatus (10) .

The process can include the following steps:
- disposing a plurality of alignments of single portions (2) coerced towards the discharge passageway (112) of respective discharge dispositions (11) disposed in relative proximity to each other,
- operating each one of said alignments of single portions (2) by means of:
   - apprehending an input associated with said alignment or with respective discharge disposition (11);
   - actuating the discharge disposition (11) of said alignment, in particular so as to remove the retention of the furthest downstream single portion (2), so as to supply the latter to a product preparation device (12) ;
   - apprehending an input associated with the conclusion of the product preparation cycle;
   - optionally, preventing the operation of another alignment of single portions (2) or of respective discharge disposition (11), before apprehending an input associated with the conclusion of the product preparation cycle.

The process can include a cycle of distribution of single portions (2) of an edible substance to consumption locations (C) that can include:
- transporting a first type of cartridge (1) with a plurality of single portions (2), from a supply location to a consumption location (C);
- operating the single portions (2) in an apparatus (10) at the consumption location (C);
- optionally, transporting said empty cartridge (1) to a supply location so that can be reloaded with single portions (2);
whereby the operation of the single portions (2) can include at least one of:
- placing a first type of cartridge (1) in operative position on a discharge disposition (11) of a product preparation apparatus (10)
- communicating to a supply location, for example wirelessly, operation data associated with the cartridge (1).

The process can include a cycle of distribution of single portions (2) of an edible substance to consumption locations (C) that can include:
- transporting a second type of cartridge (1') from a supply location to a consumption location (C);
- opening an exterior package (3A) so as to withdraw an interior package (3B) containing one alignment of single portions (2);
- optionally, removing the alignment of single portions (2) from the interior package (3B);
- disposing an alignment of single portions (2) in operative position on an apparatus s(10), for example inside of a collection part (110) and/or along a support part (111) associated with a discharge disposition (11) of the apparatus (10);
- operating the single portions (2) in an apparatus (10) at the consumption location (C);
and further includes one of:
- sending the exterior package (3A) back to a supply location and the interior package (3B) to a disposal of biodegradable waste;
- sending at least one of: the exterior package (3A) and the interior package (3B) to a disposal of biodegradable waste.

The operation of at least one type of apparatus (10) further includes the step of actuating the circulation of pressurized flow through the product preparation device (12) in a closed position and devoid of single portion (2), so as to wash residues of edible substance or associated with the preparation of edible product, whereby said step can be carried out automatically after removal of a cartridge (1) or opening of a closing part (110) associated with a discharge disposition (11) .

## Claims

1. System for distributing and preparing edible products, for example a beverage, and comprising:
- at least one type of **cartridge (1, 1')** comprising a package (3) that gas barrier confines a plurality of single portions (2) of aromatic edible substance, for example roast and ground coffee beans, devoid of respective single packages,
- at least one type of product preparation **apparatus (10, 10')** comprising a discharge disposition (11, 11') and a product preparation device (12), for example an extraction device, adapted so that can collect and operate a single portion (2),
whereby the discharge disposition (11, 11') presents a discharge passageway (112) adapted for passage of single portions (2), preferentially in a previously determined position of its central symmetry axis (X₂), and
whereby a plurality of single portions (2) can be disposed along a previously defined alignment on a discharge position upstream of the discharge passageway (112),
**characterized**
**in that** the system is adapted so that single portions (2) can be retained in discharge position, forcefully constrained towards the discharge passageway (112) by an upstream force, and so that an interruption of said retention can be actuated so as to deliver the single portions (2) one-by-one to the product preparation device (12).

2. System according to claim 1, **characterized in that** the system is adapted so that the supply of single portions (2) between at least one of: the passageway in the package (3) and the discharge passageway (112), and the product preparation device (12), presents at least one of:
- extends along a trajectory that at least partially overlaps in vertical projection over an open position of the product preparation device (12) where can collect a single portion (2) ;
- extends along a trajectory without change in the orientation of the central symmetry axis (X₂) of the single portion (2), or with a change thereof of up to 95° relative to its position in the passageway of the package (3) or cartridge (1, 1');
- extends only along a vertical plane, preferentially also only along a vertical path, or along a plane converging towards the vertical plane that insects the product preparation device (12),
- is driven only by action of the gravity force, at least upstream of the discharge disposition (11, 11');
- is driven though a conduction disposition (13) disposed directly upstream of the discharge disposition (11) and upstream of the product preparation device (12).

3. System according to claims 1 or 2, **characterized in that** the system comprises a type of apparatus (10, 10') presenting a discharge disposition (11, 11') adapted so that can retain an alignment of single portions (2) according to at least one of:
- by direct contact with the edible substance of the furthest downstream single portion (2) in the alignment of single portions (2);
- against the action of the gravity force, by means of retention of the single portion (2) furthest downstream that is in the upstream proximity, directly adjacent or inside of the discharge disposition (11), and
- in operative discharge position in a previously defined spatial position, including similar, oblique or orthogonal, relative to a central region of the discharge passageway (112),
whereby the discharge disposition (11) preferentially presents a collection part (110) and a support part (111) associated with an alignment of single portions (2), and
**in that** the system comprises a type of apparatus (10, 10') presenting a discharge disposition (11, 11') in functional connection with control means (15) so that can be actuated for temporary removal of the retention of the furthest downstream single portion (2) in a respective alignment of single portions (2), whereby said control means (15) are further adapted so that can regulate the opening and closing of the product preparation device (12), including according to the actuation of said removal of retention by the discharge disposition (11).

4. System according to any of claims 1 to 3, **characterized in that** the system comprises a type of apparatus (10, 10') presenting at least one type of discharge disposition (11, 11') that presents at least one of:
- a discharge passageway (112) downstream of the alignment of single portions (2), preferentially with a shape similar and generally aligned with at least one of: the shape of the furthest downstream single portion (2), and the central symmetry axis (X₂) thereof, the lateral shape of the furthest downstream single portion (2) and oblique or orthogonal to the central symmetry axis (X₂) thereof;
- a support part (111) configured so that can retain the single portions (2) in only a portion of the perimeter thereof, and with a cross section different from the cross section of the single portions (2), preferentially also different from the shape of the discharge passageway (112).

5. System according to any of claims 1 to 4, **characterized in that** the system comprises:
- a type of apparatus (1) adapted so that can be removably retained in operative position on a discharge disposition (11), and
- a type of apparatus (10) with a discharge disposition (11) provided on a portion of the exterior surface, preferentially a top or frontal surface of the apparatus (10), and presenting at least one of:
- a collection part (110) configured as a cavity so that can collect at least one base region of the package (3), preferentially at least a closing part (32) of the cartridge (1), preferentially with cross section of shape similar to, or different from the shape of cross section of at least one of: a container part (31) and a closing part (32) of the package (3), and/or
- a discharge passageway (112) adapted so that can provide passage connection for single portions (2) from the cartridge (1) and towards the interior of the apparatus (10) .

6. System according to any of claims 1 to 5, **characterized in that** the system comprises a type of apparatus (10) presenting a discharge disposition (11) with a support part (111) configured as a tubular projection, preferentially disposed on the collection part (110) so that confines the discharge passageway (112), whereby the discharge part (11) is further adapted so that can provide at least one of: retaining a package (3) of cartridge (1), preferentially by the closing part (32) thereof, and apprehending data from the package (3), preferentially by data apprehension means (14), thereby enabling movement of the single portions (2) relative to the collection part (110) and in direction of the discharge passageway (112).

7. System according to any of claims 1 to 6, **characterized in that** the system comprises a type of cartridge (1) presenting a package (3) with retention means (34) adapted so that can provide removable retention in operation position on the discharge disposition (11), whereby said retention means (34) are preferentially configured as spot cavities, in particular in the shape of notches or slots, preferentially on the exterior surface of a closing part (32) of package (3), preferentially of extension smaller than 10°, preferentially smaller than 5°, disposed asymmetrically relative to a central symmetry axis (X₃) and in at most two, or in only one previously defined angular position relative to the discharge disposition (11).

8. System according to any of claims 1 to 4 or 7, **characterized in that** the system presents:
- a type of cartridge (1') adapted so that can supply a plurality of single portions (2), one-by-one or jointly, to a discharge disposition (11), in particular to at least one of: a collection part (110) and a support part (111), and
- a type of apparatus (10') presenting a discharge disposition (11') including a collection part (110) configured with a container-like shape so that can collect at least one previously defined alignment of single portions (2), preferentially through an access different from the discharge passageway (112),
so that the single portions (2) can be maintained in operative discharge position in at least one previously defined alignment relative to the discharge passageway (112), whereby the discharge disposition (11') is preferentially provided inside the apparatus (10'), or as a container that can be retained in operative discharge position on an exterior surface of the apparatus (10'), preferentially adapted so that can be removably retained.

9. System according to any of claims 1 to 4 or 7 to 8,
**characterized in that** the system comprises a type of apparatus (10') presenting a discharge disposition (11') with a collection part (110) and a support part (111) adapted so that can confine and support the single portions (2) in a previously defined alignment relative to the discharge passageway (112), whereby the support part (111) is preferentially adapted so that can be actuated and provide or transmit movement to the single portions (2) towards the discharge passageway (112) and relative to the container part (110), and/or
**in that** the system comprises a type of apparatus (10') presenting a discharge disposition (11') with a collection part (110) provided as a portion of container type and at least partially inside the apparatus (10) relative to a casing of apparatus (10), preferentially at least in most part of its extension, or as a portion of container type completely outside relative to a casing of apparatus (10), whereby the collection part (110) is preferentially adapted so that can be removably retained in operative position on a support part (111) .

10. System according to any of claims 1 to 4 or 7 to 9,
**characterized**
**in that** the system comprises a type of apparatus (10') presenting a discharge disposition (11') whereby at least one of: collection part (110) and support part (111) is adapted so that can collect at least one interior package (3B) with an alignment of single portions (2), whereby the support part (111) is preferentially adapted so that can be retained and removed inside the collection part (110).

11. System according to any of previous claims, **characterized**
**in that** the system comprises a first type of cartridge (1) that presents closing means (33) in the form of a lid and associated with the closing part (32) so that can provide gas barrier, and/or
**in that** the system comprises a second type of cartridge (1') that presents closing means (33) adapted so that can be selectively removed when the package (3) is in operative position in the discharge disposition (11) and that can be applied when not.

12. System according to any of previous claims, **characterized in that** the system comprises a type of apparatus (10, 10') adapted so that can provide supply of the single portions (2) between the discharge passageway (112) and the product preparation device (12), so that the edible substance of the single portions (2) does not touch any other part of the apparatus (10), preferentially in a trajectory with extension smaller than twice the characteristic dimension (D₂) thereof, preferentially smaller than one and half times the characteristic dimension (D₂) thereof, and preferentially without changing the spatial orientation of the central symmetry axis (X₂) of the single portion (2).

13. System according to any of previous claims, **characterized in that** the system comprises a type of apparatus (10, 10') presenting a conduction disposition (13) configured so that can provide conduction of single portion (2) between the discharge passageway (112) and the product preparation device (12), whereby the apparatus (10, 10') is configured so that the edible substance of the single portions (2) only touches the conduction disposition (13) between the discharge passageway (112) and the product preparation device (12).

14. System according to any of previous claims, **characterized in that** the system comprises a type of apparatus (10, 10') that presents one of:
- a conduction disposition (13) configured so that can conduct single portions (2) from the discharge passageway (112) of a respective discharge disposition (11), preferentially extending along a common central symmetry axis, and preferentially also common to a symmetry axis of the cartridge (X₃);
- a conduction disposition (13) configured so that can conduct single portions (2) from the discharge passageways (112) of a plurality of discharge dispositions (11), and preferentially extending along a vertical projection common to a region of casing of apparatus (10) presenting a plurality of discharge dispositions (11).

15. System according to any of previous claims, **characterized in that** the system comprises a type of apparatus (10, 10') that presents a conduction disposition (13) provided in at least one of: tubular shape and shell shape, and in the proximity of the discharge passageway and of the open position of the product preparation device (12), and
**in that** at least one type of apparatus (10, 10') presents a conduction disposition (13) with a vertical extension that corresponds to at least one of:
- at most five times, preferentially at most three times, particularly preferentially at most two times the height of a single portion (2);
- at most twice, preferentially at most the width of a single portion (2).

16. Process for operating a system of distribution and preparation of edible products, **characterized**
**in that** includes at least one cycle of preparation of edible product, whereby single portions (2) devoid of respective single packages are operated in an apparatus (10) of preparation of edible product, and that comprises the steps:
- disposing a plurality of single portions (2) in an operative position where they are impinged by a force along a previously defined alignment relative to a discharge disposition (11) and operatively retained upstream of a discharge passageway (112) thereof;
- optionally, confirming that the product preparation device (12) is in the open position;
- operating the removal of retention so as to supply the single portion (2) furthest downstream to the product preparation device (12);
- operating the closure of the product preparation device (12) ;
- impinging directly the single portion (2) with a pressurized flow, so that the pressurized flow only interacts with the edible substance in the volume confined by the closed product preparation device (12),
- discharging edible product from the closed product preparation device (12);
- optionally, operating the opening of the product preparation device (12);
- discharging operation residues downstream thereof, whereby the residues do not include non-bio-degradable materials.

17. Process according to claim 16, **characterized in that** the operation of the single portions (2) in the apparatus (10) further includes at least one of the following steps:
- disposing the single portions (2) in a similar alignment, preferentially including of respective central symmetry axis (X₂), relative to the discharge disposition (11);
- optionally, detecting the presence and/or correct disposition of the alignment of single portions (2) relative to the discharge disposition (11);
- actuating the discharge disposition (11) of said alignment, in particular so as to remove the retention of the furthest downstream single portion (2) therein, so as to supply the latter to a product preparation device (12) ;
- supplying the single portions (2) to the product preparation device (12) only by the action of the gravity force, at least downstream of the discharge disposition (11),
whereby the single portions (2) preferentially carry out a generally vertical route inside the apparatus (10), without transversal displacement relative to the vertical direction, preferentially only actuated by the action of the gravity force.
